# EUROPÄISCHE PATENTSCHRIFT

(11) **EP 3 042 097 B1**
(45) Veröffentlichungstag und Bekanntmachung des Hinweises auf die Patenterteilung: **24.10.2018**
(21) Anmeldenummer: 14755591.6
(22) Anmeldetag: 12.08.2014
(51) Int. Cl.: F16D 66/02

(54) **BREMSE MIT ANORDNUNG ZUR VERSCHLEISSERKENNUNG**
BRAKE WITH SYSTEM FOR DETECTING WEAR
FREIN AVEC ENSEMBLE DE RECONNAISSANCE D'USURE

(30) Priorität: 03.09.2013 DE 102013014534
(43) Veröffentlichungstag der Anmeldung: 13.07.2016
(73) Patentinhaber: Sew-Eurodrive GmbH & Co. KG, 76646 Bruchsal (DE)
(72) Erfinder: ERMEL, Hubert, 76139 Karlsruhe (DE)
(86) Internationale Anmeldenummer: PCT/EP2014/002205
(87) Internationale Veröffentlichungsnummer: WO 2015/032468

(56) Entgegenhaltungen:
- EP-A1- 1 970 159
- EP-A2- 2 434 622
- DE-A1-102008 020 425
- DE-A1-102008 032 818
- DE-A1-102009 008 341
- DE-A1-102010 045 447
- DE-A1-102011 005 302
- US-A1- 2006 042 734

## Beschreibung

Die Erfindung betrifft eine Bremse mit Anordnung zur Verschleißerkennung.

Aus der EP 0 811 780 B1 ist eine elektromagnetisch betätigbare Bremse bekannt, die einen Bremsbelag aufweist, der dem Verschleiß unterliegt.

Aus der EP 1 970 159 A1 ist als nächstliegender Stand der Technik eine Bearbeitungsmaschine mit Mitteln zur Erfassung von Bearbeitungsparametern bekannt.
Aus der DE 10 2008 020425 A1 ist ein System zur Verschleißerkennung von Bremsbelägen bekannt.
Aus der DE 10 2010 045447 A1 ist ein Elektromotor bekannt.
Aus der DE 10 2011 005302 A1 ist ein Verschleißerkennungssystem bekannt.

Aus der DE 10 2008 032818 A1 ist eine Bremsbacke bekannt.
Aus der US 2006/042734 A1 ist ein Bremssystem mit Warnsystem hierzu bekannt.
Aus der DE 10 2009 008341 A1 ist eine Fahrzeugbremse bekannt.

Aus der EP 2 434 622 A2 ist ein Echtzeitmesssystem bekannt.
Der Erfindung liegt daher die Aufgabe zugrunde, eine Verschleißerkennung in einfacher und sicherer Weise auszubilden.

Erfindungsgemäß wird die Aufgabe bei der Bremse nach den in Anspruch 1 oder 2 angegebenen Merkmalen gelöst.

Wichtige Merkmale der Erfindung bei der Anordnung zur Verschleißerkennung sind, dass die Anordnung einen drehbar gelagerten Belagträger, an dem ein Bremsbelag angeordnet ist, umfasst, wobei ein Sender und/oder eine Antenne zumindest teilweise im Bremsbelag angeordnet sind,
so dass bei Erreichen einer kritischen Restwandstärke des Bremsbelags die Funktion des Senders gestört wird oder ist.
Von Vorteil ist dabei, dass bei Erreichen einer unzulässig hohen Abnutzung durch Zerstörung des Senders, durch Zerstörung eines Teils des Senders oder durch Zerstörung der Antenne kein Signal empfangbar ist. Auf diese Weise wird aus dem Funktionsausfall das Erreichen der unzulässig hohen Abnutzung erkennbar und ein entsprechendes Fehlersignal oder Warnsignal erzeugbar.
Wichtige Merkmale der Erfindung bei der Anordnung zur Verschleißerkennung sind, dass sie einen drehbar gelagerten Belagträger umfasst, an dem ein Bremsbelag angeordnet ist,
wobei ein Sender und/oder eine Antenne zumindest teilweise in einem vom Belagträger und Bremsbelag begrenzten Raumbereich angeordnet sind,
so dass bei Erreichen einer kritischen Restwandstärke des Bremsbelags die Funktion des Senders gestört ist.

Von Vorteil ist dabei, dass der Sender auf dem Belagträger anbringbar ist, beispielsweise aufgeklebt, und der Bremsbelag eine Vertiefung aufweist, so dass der Bremsbelag
den Sender in radialer Richtung umgibt. In axialer Richtung wird der durch die Vertiefung entstehende, den Sender aufnehmende Raumbereich vom Belagträger begrenzt und entgegen der axialen Richtung vom Bremsbelag.
Bei einer vorteilhaften Ausgestaltung ist der Sender ein RFID oder weist einen RFID auf. Von Vorteil ist dabei, dass eine kostengünstige elektronische Schaltung einsetzbar ist.
Unter RFID werden auch OFW-Sensoren verstanden. Hierbei ist statt einer elektronischen Schaltung die Antenne mit einem Piezo-Element verbunden, so dass durch die empfangenen elektromagnetischen Wellen eine Oberflächenwelle angeregt wird. Diese Welle wird an einer oder mehreren Reflektoreinheiten reflektiert und der rückkehrende Anteil vom Piezo-Element in eine elektrische Wechselspannung gewandelt, die über die Antenne abgestrahlt wird.
Somit wird also ebenfalls ein elektromagnetisches Antwortsignal auf einen Anfragesignal hin erzeugt. Die Welle wird vorzugsweise auf einem Halbleiter oder Keramik-Plättchen angeregt und die Reflektoreinheiten als Verdickung auf dem Plättchen realisiert. Das Piezo-Element ist hierbei ebenfalls am Plättchen aufgebracht.
Bei einer vorteilhaften Ausgestaltung ist eine elektronische Schaltung zum Empfang eines Signals des Senders stationär angeordnet, insbesondere wobei die Schaltung ein RFID-Lesegerät ist. Von Vorteil ist dabei, dass ein kostengünstiges Gerät einsetzbar ist. Bei Ausführung des RFID als OFW-Sensor wird ein sehr hoch frequentes Abfragesignal verwendet und das Antwortsignal entsprechend ausgewertet. Die stationär angeordnete elektronische Schaltung zum Senden des Abfragesignals und nachfolgenden Empfang des Antwortsignals des OFW-Sensors wird hier auch als OFW-Lesegerät bezeichnet.

Erfindungsgemäße Merkmale bei der Bremse mit einer vorgenannten Anordnung sind, dass der Belagträger drehfest aber axial verschiebbar auf einer Welle angeordnet ist, also drehfest aber in Wellenachsrichtung der Welle verschiebbar auf der Welle angeordnet ist,
wobei die Welle drehbar gelagert ist zu einem Gehäuseteil,
wobei eine Ankerscheibe zwischen einer Spule und dem Belagträger angeordnet ist und drehfest aber axial, also in Wellenachsrichtung, verschiebbar zur Spule und/oder zum Gehäuseteil angeordnet ist,
insbesondere wobei bei Bestromung der Spule die Ankerscheibe zur Spule hin gezogen wird entgegen der von Federelementen erzeugten Federkraft und somit die Bremse gelüftet ist,
insbesondere wobei bei Nicht-Bestromung der Spule die Ankerscheibe von den Federelementen zum Belagträger hin gedrückt wird, insbesondere auf einen Bremsbelag des Belagträgers.

Von Vorteil ist dabei, dass die Sicherheit erhöht ist, da bei unzulässig hoher Abnutzung des Bremsbelags die Funktion des Senders, insbesondere RFID, gestört ist. Auf diese Weise ist ein unzulässig hoher Verschleiß des Bremsbelags erkennbar und somit eine Verschleißüberwachung ausführbar.

Wichtige Merkmale bei dem Elektromotor sind, dass er eine vorgenannte Bremse aufweist. Von Vorteil ist dabei, dass eine erhöhte Sicherheit erreichbar ist.

Bei einer vorteilhaften Ausgestaltung ist am oder im Elektromotor ein weiterer Sender angeordnet, dessen Signal von der elektronischen Schaltung auswertbar ist, insbesondere ebenfalls auswertbar ist. Von Vorteil ist dabei, dass mehrere RFID abfragbar sind. Somit ist ein erster abfragbar, der für die Verschleißerkennung eingesetzt ist, ein zweiter, der für die Abfrage der Temperatur, insbesondere eines drehbar gelagerten Teils vorgesehen ist, und gegebenenfalls weitere, die zur Erfassung von Werten anderer Zustandsgrößen des Elektromotors vorgesehen sind. Somit ist nur eine einzige elektronische Schaltung notwendig, insbesondere ein einziges RFID-Lesegerät, obwohl mehrere RFID im Motor angeordnet sind.

Wichtige Merkmale bei der Verwendung sind, dass die Verwendung einen RFID betrifft, der als Mittel zur Detektion des Bremsbelagverschleisses einer Bremse, insbesondere einer elektromagnetisch betätigbaren Bremse, insbesondere eines Elektromotors, vorgesehen ist.

Von Vorteil ist dabei, dass ein kostengünstiges Bauteil verwendbar ist und eine berührungslose Detektion des Verschleißes des drehbar angeordneten Bremsbelags ausführbar ist. Somit ist ohne aufwendige Sensorik der Verschleiß erkennbar, indem das Bauteil, also RFID, funktionsunfähig wird, wenn der kritische Verschleißzustand erreicht wird. Dabei definiert die Tiefe, in welcher der RFID oder seine Antenne im Bremsbelag angeordnet ist, den kritischen Verschleißbetrag. Je tiefer der RFID angebracht ist, desto mehr Verschleiß ist zulässig.

Bei einer vorteilhaften Ausgestaltung wird in oder an jedem Bremsbelag ein RFID angeordnet, so dass die Abnutzung jedes Bremsbelags individuell überwachbar ist. Zur weiteren Erhöhung der Sicherheit sind auch mehrere RFID im jeweiligen Bremsbelag anbringbar.

Bei einer vorteilhaften Ausgestaltung wird die Detektion des Bremsbelagverschleisses mittels Zerstörung des RFID ausgeführt. Von Vorteil ist dabei, dass eine sehr sichere Erkennung des kritischen Verschleißbetrags erreichbar ist. Wenn nämlich der RFID ausfällt, wird eine Warnung angezeigt. Somit wird bei kritischem Verschleiß und auch bei sonstig bedingtem Ausfall des RFID eine Warnung herausgegeben. Dadurch ist eine sehr hohe Sicherheit erreichbar, da auch die Funktion des überwachenden Bauteils selbst mitüberwacht wird.

Bei einer vorteilhaften Ausgestaltung wird bei einer Bremse nach Art der in Figur 1 der EP 0 811 780 B1 in einem oder in beiden Bremsbelägen oder zwischen Belagträger und Bremsbelag ein RFID angeordnet und am dortigen Gehäuseteil 6 ein Lesegerät.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein erstes Ausführungsbeispiel gezeigt, bei welchem ein Sender 3, insbesondere RFID, in einem Bremsbelag 2 angeordnet ist.
In der Figur 2 ist ein weiteres Ausführungsbeispiel gezeigt, bei welchem der Sender 3, insbesondere RFID, außerhalb des Bremsbelags 2 angeordnet ist und eine mit dem Sender verbundene Antenne 4 im Bremsbelag 2 angeordnet ist..

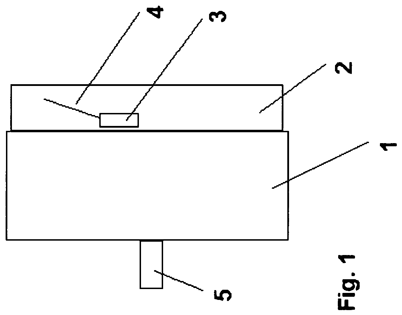

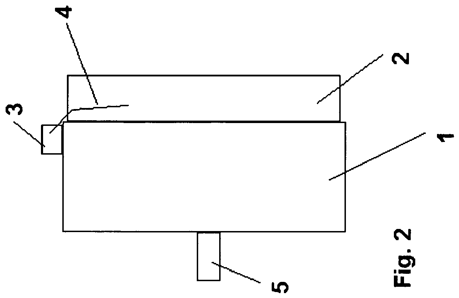

Bei der Erfindung weist ein drehbar gelagerter Belagträger 1 einen Bremsbelag 2 auf, in welchem ein Sender 3, insbesondere RFID, angeordnet ist, wie in Figur 1 gezeigt, oder an welchem ein Sender 3 angeordnet ist, wie in Figur 2 gezeigt.

Bei der Ausführung nach Figur 1 ist ein Elektromotor mit einer elektromagnetisch betätigbaren Bremse ausgeführt. Dabei ist ein Belagträger 1 drehfest, aber axial verschiebbar, auf einer Rotorwelle 5 des Elektromotors angeordnet. Der Belagträger weist zumindest an einer seiner axialen Stirnseiten einen Bremsbelag 4 auf.

Eine Ankerscheibe, insbesondere aus Stahl, ist drehfest aber axial verschiebbar zwischen dem Bremsbelag 2 und einer Spule angeordnet, wobei die Spule an einem Gehäuseteil des Motors befestigt ist.

Die Rotorwelle 5 ist drehbar gelagert im Gehäuseteil, insbesondere mittels eines Wälzlagers, wie Kugellager oder dergleichen.

Auf der axial von der Ankerscheibe abgewandten Seite des Belagträgers 1 ist ebenfalls ein - in Figur 1 nicht dargestellter - Bremsbelag 2 angeordnet, so dass der Belagträger beidseitig Bremsbeläge aufweist.

Das Gehäuseteil selbst oder ein direkt oder indirekt mit dem Gehäuseteil fest verbundenes Teil weist eine Bremsfläche auf, gegen die der von der Ankerscheibe abgewandt angeordnete Bremsbelag drückbar ist.

Bei Bestromung der Spule wird die Ankerscheibe entgegen der Federkraft von an dem Gehäuseteil, an der Spule oder an einem Spulenkern der Spule abgestützten Federelementen zur Spule hin bewegt und somit die Bremse gelüftet.

Bei Nicht-Bestromung der Spule wird die Ankerscheibe von den Federelementen auf den Bremsbelag 2 gedrückt. Somit wird auch der gesamte Belagträger 1 axial zur Bremsfläche bewegt und der entsprechende Bremsbelag auf die Bremsfläche gedrückt.

Der Bremsbelag 2 weist eine axiale Dicke auf, die mit zunehmender Betätigungszeit der Bremse abnimmt.

Zur Überwachung dieses Bremsbelagverschleisses wird erfindungsgemäß ein Sender, insbesondere RFID, im Bremsbelag 2 angeordnet. Eine elektronische Schaltung ist stationär angeordnet am Motor und empfängt das Signal des Senders, solange dieser oder seine an ihm angeschlossene Antenne 4, funktionstüchtig ist.

Die elektronische Schaltung ist dabei derart ausführbar, dass sie ein Signal, insbesondere also Abfragesignal, sendet, das von dem Sender empfangbar ist und dieser daraus elektrisch versorgbar ist, so dass dieser Sender ein als Antwortsignal vorgesehenes Signal senden kann. Solange die elektronische Schaltung dieses Antwortsignal empfängt, wird der Sender als funktionstüchtig angenommen.

Sobald kein Antwortsignal des Senders 3 mehr empfangen werden kann, wird von der elektronischen Schaltung eine Warnmeldung angezeigt oder weitergeleitet. Somit ist ein unzulässig hoher Verschleiß der Bremse detektierbar.

Wie in Figur 1 gezeigt, ist in einer ersten Ausführungsform der Sender 3 selbst und/oder seine Antenne 4 im Bremsbelag 2 angeordnet. Sobald die Bremsbelagschicht, unter welcher der Sender 3 und/oder die Antenne 4 angeordnet ist, abgetragen ist, wirkt die Ankerscheibe zerstörerisch ein auf den Sender 3 und/oder seine Antenne 4. Somit ist die Funktion des Sendens des Antwortsignals nicht mehr gewährleistet.

Wie in Figur 2 gezeigt, ist der Sender auch außerhalb des Bremsbelags 2 anordenbar, wobei dann nur die Antenne 4 zumindest teilweise im Bremsbelag 2 eingebettet ist. Bei Erreichen einer unzulässig dünnen Restwandstärke wird der Sender zerstört und somit wiederum das Antwortsignal unterbunden.

In beiden Ausführungsbeispielen ist mit der elektronischen Schaltung auch ein weiterer Sender abfragbar, der nicht an dem Bremsbelagträger angeordnet ist. Beispielsweise ist der weitere Sender am Rotor des Motors angeordnet und somit die Temperatur des Rotors abfragbar.

Vorzugsweise wird der RFID hitzestabil ausgeführt. Dies bedeutet, dass der RFID beim Herstellen in den Bremsbelag eingebracht wird und mindestens eine Stunde einer Temperatur des Bremsbelags von mindestens 170° C ausgesetzt wird und trotzdem nach Abkühlung auf die gewöhnliche Betriebstemperatur fehlerfrei betriebsbereit einsetzbar ist.

In weiteren erfindungsgemäßen Ausführungsbeispielen wird der Sender aus einer Verlustenergie des Motors versorgt, wie Wärmestrom, Dreh- und/oder Rüttelschwingungen. Hierzu ist der Sender elektrisch mit einem entsprechenden Element verbunden. Alternativ weist der Sender eine Batterie oder einen Akkumulator zur elektrischen Versorgung auf oder wird induktiv versorgt, indem dem durch die Spule fließenden Gleichstrom ein Wechselstromanteil überlagert wird.

### Bezugszeichenliste

1 Belagträger
2 Bremsbelag
3 Sender, insbesondere RFID
4 Antenne
5 Rotorwelle des Elektromotors

## Patentansprüche

1. Bremse mit einer Anordnung zur Verschleißerkennung,
umfassend einen drehbar gelagerten Belagträger (1), an dem ein Bremsbelag (2) angeordnet ist,
wobei ein Sender (3) und/oder eine Antenne (4) zumindest teilweise im Bremsbelag (2) angeordnet sind,
so dass bei Erreichen einer kritischen Restwandstärke des Bremsbelags (2) die Funktion des Senders gestört ist,
**dadurch gekennzeichnet, dass**
der Sender (3) aus einem Mittel zur Wandlung einer Verlustenergieart der Anordnung elektrisch versorgt ist,
wobei das Mittel ein Piezoelement oder einen Thermogenerator, insbesondere einen nach dem Seebeck-Effekt arbeitender Generator oder ein Peltier-Element, aufweist,
wobei der Belagträger (1) drehfest aber axial, insbesondere also in Drehachsrichtung, verschiebbar auf einer Welle, insbesondere deren Wellenachse die Drehachse ist, angeordnet ist,
wobei die Welle drehbar gelagert ist zu einem Gehäuseteil,
wobei eine Ankerscheibe zwischen einer Spule und dem Belagträger (1) angeordnet ist und drehfest aber axial, also in Wellenachsrichtung, verschiebbar zur Spule und/oder zum Gehäuseteil angeordnet ist,
insbesondere wobei bei Bestromung der Spule die Ankerscheibe zur Spule hin gezogen wird entgegen der von Federelementen erzeugten Federkraft und somit die Bremse gelüftet ist,
insbesondere wobei bei Nicht-Bestromung der Spule die Ankerscheibe von den Federelementen zum Belagträger (1) hin gedrückt wird, insbesondere auf einen Bremsbelag (2) des Belagträgers (1).

2. Bremse mit einer Anordnung zur Verschleißerkennung,
umfassend einen drehbar gelagerten Belagträger (1), an dem ein Bremsbelag (2) angeordnet ist,
wobei zumindest ein Sender (3) und/oder eine Antenne (4) zumindest teilweise in einem vom Belagträger (1) und Bremsbelag (2) begrenzten Raumbereich angeordnet sind,
so dass bei Erreichen einer kritischen Restwandstärke des Bremsbelags (2) die Funktion des Senders gestört ist,
**dadurch gekennzeichnet, dass**
der Sender (3) aus einem Mittel zur Wandlung einer Verlustenergieart der Anordnung elektrisch versorgt ist,
wobei das Mittel ein Piezoelement oder einen Thermogenerator, insbesondere einen nach dem Seebeck-Effekt arbeitender Generator oder ein Peltier-Element, aufweist,
wobei der Belagträger (1) drehfest aber axial, insbesondere also in Drehachsrichtung, verschiebbar auf einer Welle, insbesondere deren Wellenachse die Drehachse ist, angeordnet ist,
wobei die Welle drehbar gelagert ist zu einem Gehäuseteil,
wobei eine Ankerscheibe zwischen einer Spule und dem Belagträger (1) angeordnet ist und drehfest aber axial, also in Wellenachsrichtung, verschiebbar zur Spule und/oder zum Gehäuseteil angeordnet ist,
insbesondere wobei bei Bestromung der Spule die Ankerscheibe zur Spule hin gezogen wird entgegen der von Federelementen erzeugten Federkraft und somit die Bremse gelüftet ist,
insbesondere wobei bei Nicht-Bestromung der Spule die Ankerscheibe von den Federelementen zum Belagträger (1) hin gedrückt wird, insbesondere auf einen Bremsbelag (2) des Belagträgers (1).

## Claims

1. A brake with an arrangement for recognising wear,
comprising a rotatably mounted lining carrier (1) on which a brake lining (2) is arranged,
wherein a transmitter (3) and/or an antenna (4) is/are arranged at least partially in the brake lining (2),
so that upon reaching a critical remaining wall thickness of the brake lining (2) the operation of the transmitter is disrupted,
**characterised in that**
the transmitter (3) is supplied with electricity from a means for converting a type of lost energy of the arrangement,
wherein the means has a piezoelement or a thermoelectric generator, in particular a generator operating according to the Seebeck effect or a Peltier element,
wherein the lining carrier (1) is arranged non-rotatably but axially, in particular therefore in the direction of the axis of rotation, displaceably on a shaft, in particular the shaft axis of which is the axis of rotation,
wherein the shaft is rotatably mounted relative to a housing part,
wherein an armature disc is arranged between a coil and the lining carrier (1) and is arranged non-rotatably but axially, i.e. in the axial direction of the shaft, displaceably relative to the coil and/or to the housing part,
in particular wherein when the coil is energised the armature disc is drawn towards the coil counter to the spring force generated by spring elements and thus the brake is released,
in particular wherein when the coil is not energised the armature disc is pressed towards the lining carrier (1) by the spring elements, in particular onto a brake lining (2) of the lining carrier (1).

2. A brake with an arrangement for recognising wear,
comprising a rotatably mounted lining carrier (1) on which a brake lining (2) is arranged,
wherein at least one transmitter (3) and/or one antenna (4) is/are arranged at least partially in a spatial region delimited by the lining carrier (1) and brake lining (2),
so that upon reaching a critical remaining wall thickness of the brake lining (2) the operation of the transmitter is disrupted,
**characterised in that**
the transmitter (3) is supplied with electricity from a means for converting a type of lost energy of the arrangement,
wherein the means has a piezoelement or a thermoelectric generator, in particular a generator operating according to the Seebeck effect or a Peltier element,
wherein the lining carrier (1) is arranged non-rotatably but axially, in particular therefore in the direction of the axis of rotation, displaceably on a shaft, in particular the shaft axis of which is the axis of rotation,
wherein the shaft is rotatably mounted relative to a housing part,
wherein an armature disc is arranged between a coil and the lining carrier (1) and non-rotatably but axially, i.e. in the axial direction of the shaft, displaceably relative to the coil and/or to the housing part,
in particular wherein when the coil is energised the armature disc is drawn towards the coil counter to the spring force generated by spring elements and thus the brake is released,
in particular wherein when the coil is not energised the armature disc is pressed towards the lining carrier (1) by the spring elements, in particular onto a brake lining (2) of the lining carrier (1).

## Revendications

1. Frein équipé d'un dispositif de détection d'usure,
comportant un support (1) de garniture qui est monté à rotation, et sur lequel une garniture de freinage (2) est implantée,
un émetteur (3) et/ou une antenne (4) étant disposés, au moins en partie, dans ladite garniture de freinage (2),
de façon telle que le fonctionnement dudit émetteur soit perturbé lorsqu'une épaisseur de paroi résiduelle critique de ladite garniture de freinage (2) est atteinte,
**caractérisé par le fait que**
l'émetteur (3) est alimenté électriquement à partir d'un moyen de conversion d'un mode énergie perdue dudit dispositif,
lequel moyen présente un élément piézoélectrique ou un générateur thermoélectrique, en particulier un générateur fonctionnant par effet Seebeck, ou un élément Peltier,
sachant que le support (1) de garniture est calé avec verrouillage rotatif, mais avec faculté de déplacement axial, c'est-à-dire en particulier dans la direction de l'axe de rotation, sur un arbre dont l'axe constitue notamment l'axe de rotation,
ledit arbre étant monté à rotation par rapport à une partie de carter,
sachant qu'un disque d'induit ou de palier est interposé entre une bobine et ledit support (1) de garniture et est agencé, par rapport à ladite bobine et/ou à ladite partie de carter, avec verrouillage rotatif, mais avec faculté de déplacement axial, c'est-à-dire dans la direction de l'axe dudit arbre,
sachant notamment que, lorsque du courant circule dans la bobine, ledit disque d'induit ou de palier est attiré vers ladite bobine en opposition à la force élastique engendrée par des éléments élastiques, le frein étant ainsi débloqué,
sachant notamment que, lorsqu'aucun courant ne circule dans ladite bobine, ledit disque d'induit ou de palier est poussé, par lesdits éléments élastiques, en direction dudit support (1) de garniture et notamment vers une garniture de freinage (2) dudit support (1) de garniture.

2. Frein équipé d'un dispositif de détection d'usure,
comportant un support (1) de garniture qui est monté à rotation, et sur lequel une garniture de freinage (2) est implantée,
au moins un émetteur (3) et/ou une antenne (4) étant disposés, au moins en partie, dans une région spatiale délimitée par ledit support (1) de garniture et par ladite garniture de freinage (2),
de façon telle que le fonctionnement dudit émetteur soit perturbé lorsqu'une épaisseur de paroi résiduelle critique de ladite garniture de freinage (2) est atteinte,
**caractérisé par le fait que**
l'émetteur (3) est alimenté électriquement à partir d'un moyen de conversion d'un mode énergie perdue dudit dispositif,
lequel moyen présente un élément piézoélectrique ou un générateur thermoélectrique, en particulier un générateur fonctionnant par effet Seebeck, ou un élément Peltier,
sachant que le support (1) de garniture est calé avec verrouillage rotatif, mais avec faculté de déplacement axial, c'est-à-dire en particulier dans la direction de l'axe de rotation, sur un arbre dont l'axe constitue notamment l'axe de rotation,
ledit arbre étant monté à rotation par rapport à une partie de carter,
sachant qu'un disque d'induit ou de palier est interposé entre une bobine et ledit support (1) de garniture et est agencé, par rapport à ladite bobine et/ou à ladite partie de carter, avec verrouillage rotatif, mais avec faculté de déplacement axial, c'est-à-dire dans la direction de l'axe dudit arbre,
sachant notamment que, lorsque du courant circule dans la bobine, ledit disque d'induit ou de palier est attiré vers ladite bobine en opposition à la force élastique engendrée par des éléments élastiques, le frein étant ainsi débloqué,
sachant notamment que, lorsqu'aucun courant ne circule dans ladite bobine, ledit disque d'induit ou de palier est poussé, par lesdits éléments élastiques, en direction dudit support (1) de garniture et notamment vers une garniture de freinage (2) dudit support (1) de garniture.
